# FASCICULE DE BREVET EUROPEEN

(11) **EP 3 144 199 B1**
(45) Date de publication et mention de la délivrance du brevet: **15.08.2018**
(21) Numéro de dépôt: 16189273.2
(22) Date de dépôt: 16.09.2016
(51) Int. Cl.: B61D 37/00, B60N 3/00, A47B 5/02, A47B 5/06

(54) **DISPOSITIF DE CONFORT, NOTAMMENT POUR VÉHICULE FERROVIAIRE, COMPRENANT UNE TABLE AMOVIBLE PERFECTIONNÉE**
VORRICHTUNG ZUR ERHÖHUNG VON KOMFORT, INSBESONDERE FÜR EIN SCHIENENFAHRZEUG, UMFASSEND EINEN HERAUSNEHMBAREN TISCH
A COMFORT DEVICE, IN PARTICULAR FOR A RAILWAY VEHICLE, COMPRISING A REMOVABLE TABLE

(30) Priorité: 17.09.2015 FR 1558730
(43) Date de publication de la demande: 22.03.2017
(73) Titulaire: ALSTOM Transport Technologies, 93400 Saint-Ouen (FR)
(72) Inventeur: PAILLER, Christophe, 17220 SALLES SUR MER (FR); LANGLOIS, Francis, 59310 FAUMONT (FR)
(74) Mandataire: Lavoix

(56) Documents cités:
- EP-A1- 1 288 096
- DE-U1- 29 808 822
- US-A- 5 037 232

## Description

La présente invention concerne un dispositif de confort, notamment destiné à équiper un véhicule de transport public, et plus particulièrement un véhicule ferroviaire, du type comportant une table et des moyens de fixation amovibles de cette table à une partie structurelle d'une salle.

Un dispositif de confort semblable au préambule de la revendication 1 est divulgué par le document DE 298 08 822 U1.

Dans certains cas, il est parfois nécessaire de réorganiser la disposition des sièges et des tables dans une salle d'un véhicule ferroviaire, par exemple afin d'adapter cette disposition au sens de circulation de ce véhicule ferroviaire.

Dans ce cas, il est nécessaire de démonter, de déplacer, puis de remonter les tables, de telles opérations étant généralement fastidieuses.

L'invention a notamment pour but de remédier à cet inconvénient, en proposant un dispositif permettant un montage et un démontage rapides, faciles et ergonomiques de la table.

A cet effet, l'invention a notamment pour objet un dispositif de confort, notamment pour des passagers de véhicule ferroviaire, comportant une table comprenant un plateau et des moyens de fixation de la table à une partie structurelle d'une salle, dans lequel les moyens de fixation comportent :
- un support fixe latéral, destiné à être fixé à une paroi verticale de la partie structurelle de la salle, comprenant une première partie de liaison par coulissement,
- un organe de fixation solidarisé au plateau de la table, comprenant une seconde partie de liaison par coulissement, complémentaire de la première, et
- des moyens rétractables de blocage de l'organe de fixation sur le support fixe latéral, actifs lorsque l'organe de fixation est rapporté sur le support fixe latéral au terme d'une course prédéfinie de la première partie de liaison par rapport à la seconde partie de liaison, ces moyens de blocage étant mobiles entre une position de blocage dans laquelle les première et seconde parties de liaison sont solidarisées entre elles, et une position de relâchement dans laquelle les première et seconde parties de liaison sont libres de se déplacer l'une par rapport à l'autre,
caractérisé en ce que l'une des première et seconde parties de liaison par coulissement est formée par un rail, s'étendant dans une direction verticale, présentant une section trapézoïdale dans un plan horizontal, et l'autre des première et seconde parties de la liaison est formée par un logement allongé complémentaire dudit rail, dans lequel le rail est susceptible de coulisser dans la direction verticale.

La table peut être démontée facilement en désactivant simplement les moyens de blocage pour désolidariser l'organe de fixation du support latéral fixe.

Le montage de la table se fait à l'inverse en amenant l'organe de fixation sur le support latéral fixe en faisant coopérer les première et seconde parties de liaison par coulissement, puis en activant les moyens de blocage.

Un dispositif de confort selon l'invention peut comporter en outre l'une ou plusieurs des caractéristiques suivantes, prises seules ou selon toutes combinaisons techniquement envisageables.
- Le rail s'étend dans la direction verticale entre une première extrémité, destinée à être présentée en premier lors de l'insertion du rail dans le logement, jusqu'à une seconde extrémité, et présente une largeur, dans une direction transversale perpendiculaire à la direction verticale, qui augmente depuis la première extrémité jusqu'à la seconde extrémité, et le logement s'étend dans la direction verticale depuis une embouchure inférieure, et présente une largeur, dans la direction transversale, qui diminue depuis cette embouchure inférieure.
- La table comprend un pied central solidaire du plateau, les moyens de fixation comportant un support fixe au sol, destiné à être fixé à une paroi de sol de la partie structurelle de la salle, destiné à être raccordé au pied central de la table, et comprenant des moyens de maintien de ce pied central.
- Le support fixe au sol comporte une forme en saillie verticale, présentant un bord périphérique comprenant un rebord supérieur s'étendant depuis une partie du bord périphérique, et le pied de table comporte une zone inférieure creuse présentant un bord intérieur de forme complémentaire à celle du bord périphérique, et présentant une butée intérieure s'étendant vers l'intérieur, ladite butée intérieure étant destinée à être insérée sous le rebord supérieur, cette butée intérieure étant ainsi destinée à coopérer avec le rebord supérieur pour limiter un déplacement vertical vers le haut du pied de table.
- Le rebord supérieur s'étend horizontalement depuis le bord périphérique en s'éloignant du support fixe latéral.
- Les moyens de blocage comportent : au moins un élément mâle porté par l'un parmi l'organe de fixation et le support fixe latéral, mobile entre une position déployée et une position escamotée, et au moins un premier organe élastique de rappel de l'élément mâle vers sa position déployée, au moins un élément femelle fixe, complémentaire de l'élément mâle, porté par l'autre parmi l'organe de fixation et le support fixe latéral, chaque élément mâle se trouvant en regard de l'élément femelle correspondant lorsque l'organe de fixation est rapporté sur le support fixe latéral au terme de la course prédéfinie de la première partie de liaison par rapport à la seconde partie de liaison.
- L'élément mâle est propre à coopérer avec ledit autre parmi l'organe de fixation et le support fixe latéral, pour être poussé vers sa position escamotée tant que les première et seconde parties de liaison coopèrent entre elles sans être au terme de leur course.
- Le dispositif de confort comporte des moyens de déplacement de l'élément mâle vers sa position escamotée, actionnables par un opérateur, par exemple au moyen d'un élément rapporté tel qu'une clé.
- Chaque élément mâle est formé par un crochet porté par un axe tournant.
- Le dispositif de confort comporte un second organe élastique agencé entre l'organe de fixation et le support fixe latéral, appliquant un effort d'écartement entre l'organe de fixation et le support fixe latéral dans la direction verticale.
- Chaque élément mâle s'étend au-dessus de son axe tournant dans une direction verticale, et comporte un corps allongé relié à l'axe tournant, et une extension s'étendant depuis en saillie depuis le corps, l'extension étant destinée à coopérer avec l'élément femelle correspondant, et le corps étant incliné par rapport à la direction verticale, vers l'élément femelle.

L'invention sera mieux comprise à la lecture de la description qui va suivre, donnée uniquement à titre d'exemple et faite en se référant aux figures annexées parmi lesquelles :
- la figure 1 est une vue de profil du dispositif de confort selon un premier exemple de mode de réalisation de l'invention ;
- les figures 2 et 3 sont des vues schématiques en coupe représentant la liaison entre un pied central d'une table et un support fixe au sol du dispositif de la figure 1, respectivement en cours d'assemblage et assemblés ;
- la figure 4 est une vue en perspective du support fixe au sol et d'un élément d'assemblage porté par le pied de table ;
- les figures 5 et 6 sont des vues en perspective d'un support fixe latéral et d'un organe de fixation du dispositif de la figure 1, respectivement selon deux angles de vue opposés ;
- les figures 7 et 8 sont des vues similaires à la figure 6 représentant l'organe de fixation et le support fixe latéral, respectivement en cours d'assemblage et assemblés ;
- la figure 9 est une vue en perspective éclatée du support fixe latéral selon une variante de réalisation ;
- la figure 10 est une vue en perspective de l'organe de fixation selon une première variante de réalisation ;
- la figure 11 est une vue en perspective de l'organe de fixation de la figure 10, montrant un détail de cet organe de fixation ; et
- la figure 12 est une vue en coupe de l'organe de fixation selon une seconde variante de réalisation.

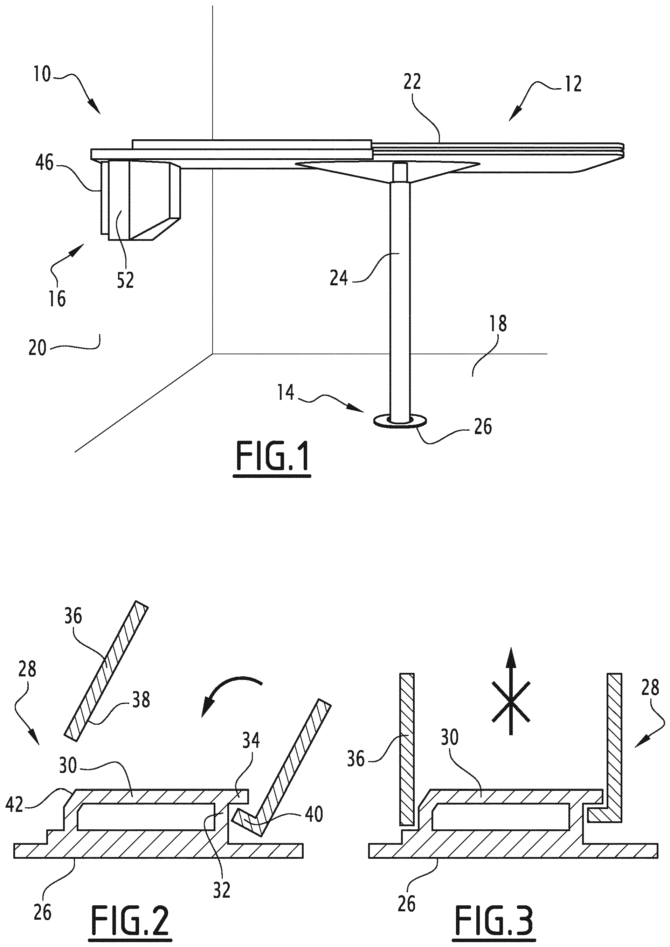

On a représenté, sur la figure 1, un dispositif 10 de confort, notamment destiné à équiper un véhicule de transport public, et plus particulièrement un véhicule ferroviaire. Ce dispositif de confort 10 est destiné à être agencé dans une salle notamment d'une salle de passagers d'un véhicule ferroviaire, une telle salle comportant une partie structurelle comprenant une paroi de sol 18 et au moins une paroi latérale 20.

Dans la présente description, on définit un « plan horizontal » comme étant parallèle au sol 18, une «direction horizontale» comme étant incluse dans un plan horizontal, et une « direction verticale » comme étant perpendiculaire à un plan horizontal.

Le dispositif de confort 10 comporte une table 12, ainsi que des premiers 14 et seconds 16 moyens de fixation de cette table 12 à la partie structurelle de la salle, et plus particulièrement à la paroi de sol 18 et à la paroi latérale 20.

La table 12 comprend de manière classique un plateau 22 et un pied central 24 lié au plateau 22, par exemple solidarisé à ce plateau 22.

Les premiers moyens de fixation 14 comportent un support fixe au sol 26, destiné à être fixé à la paroi de sol 18, et destiné à être raccordé de manière amovible au pied central 24 de la table 12. A cet effet, le support fixe au sol 26 comprend des moyens 28 de maintien du pied central 24, représentés plus en détail sur les figures 2 et 3.

Comme cela est représenté sur les figures 2 et 3, le support fixe au sol 26 comporte une forme 30 en saillie verticale, présentant un bord périphérique 32 comprenant un rebord supérieur 34 s'étendant depuis une partie de ce bord périphérique 32. Le rebord supérieur 34 s'étend horizontalement depuis le bord périphérique 32 en s'éloignant de la paroi latérale 20.

Le pied central 24 quant à lui comporte une zone inférieure creuse 36 présentant un bord intérieur 38 de forme complémentaire à celle du bord périphérique 32. Ainsi, lorsque le bord intérieur 38 coopère avec le bord périphérique 32 en entourant celui-ci, le pied central 24 est immobilisé en translation dans toute direction horizontale.

La zone inférieure creuse 36 présente par ailleurs une butée 40 faisant saillie vers l'intérieur de cette zone inférieure 36.

La butée intérieure 40 est destinée à être insérée sous le rebord supérieur 34, cette butée intérieure 40 étant destinée à coopérer avec ce rebord supérieur 34 pour limiter un déplacement vertical vers le haut du pied de table 24. Avantageusement, un jeu subsiste entre la butée intérieure 40 et le rebord supérieur 34, pour autoriser un léger déplacement vertical de la table 10 lorsque les seconds moyens de fixation 16 ne sont pas actifs.

Avantageusement, le bord périphérique 32 présente un chanfrein 42, à l'opposé du rebord supérieur 34.

L'assemblage du pied de table 24 avec le support fixe au sol 26 est réalisé tout d'abord en amenant la zone inférieure 36 de manière inclinée pour insérer la butée intérieure 40 sous le rebord supérieur 34, comme cela est représenté sur la figure 2. Puis, le pied de table 24 est basculé pour prendre une position verticale, comme cela est représenté sur la figure 3. On notera que le chanfrein 42 permet d'éviter que le bord périphérique 32 forme une butée s'opposant au basculement du pied de table 24 vers sa position verticale.

Dans cette position verticale, le bord intérieur 38 coopère avec le bord périphérique 32, si bien que le pied de table 24 est immobilisé en translation selon toute direction horizontale. Par ailleurs, du fait de la coopération de la butée intérieure 40 avec le rebord supérieur 34, le déplacement du pied de table 24 en translation verticale est limité.

La désolidarisation du pied de table 24 d'avec le support fixe au sol 26 n'est possible qu'en inclinant la zone inférieure creuse 36, dans un mouvement inverse de celui ayant servi à l'assemblage.

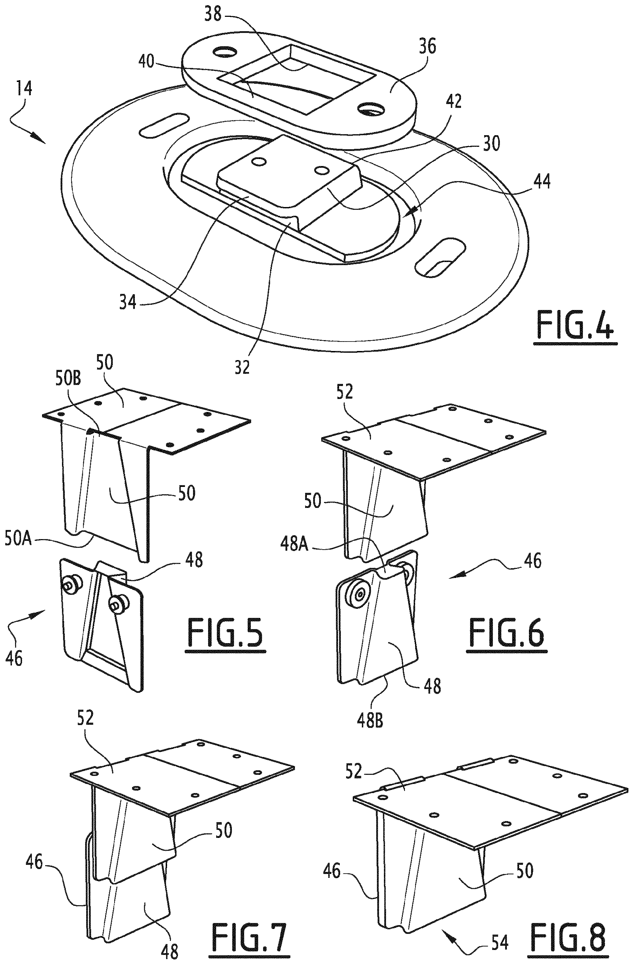

Un premier exemple de premiers moyens de fixation 14 est représenté sur la figure 4. Sur cette figure, les éléments analogues à ceux des figures précédentes sont désignés par des références identiques.

Conformément à cette variante, la zone inférieure creuse 36 est formée par une plaquette comprenant un orifice traversant délimité par le bord intérieur 38. La plaquette 36 est destinée à être fixée à une extrémité inférieure du pied de table 24.

La forme en saillie 30 est de préférence agencée dans un renfoncement 44 de manière à ne pas dépasser, ou dépasser seulement de manière légère de la surface du sol 18. Il est en effet préférable que la hauteur du support fixe au sol 14 par rapport au sol 18 soit limitée pour ne pas former une gêne lorsque la table 12 est démontée.

Les seconds moyens de fixation 16 sont représentés plus en détails sur les figures 5 à 8.

Les seconds moyens de fixation 16 comportent un support fixe latéral 46 destiné à être fixé à la paroi verticale 20 de la salle, à proximité du support fixe au sol 26, de sorte que la table 12 peut être fixée à la fois au support fixe au sol 26 et au support fixe latéral 46.

Le support fixe latéral 46 comporte une première partie de liaison par coulissement 48, complémentaire d'une seconde partie de liaison par coulissement 50, qui est portée par un organe de fixation 52 destiné à être solidarisé au plateau 22 de la table 12. La liaison par coulissement est orientée verticalement.

Les première 48 et seconde 50 parties de liaison par coulissement forment par exemple une liaison en queue d'aronde.

La première partie de liaison 48 est formée par un rail, s'étendant dans la direction verticale, et présentant une section trapézoïdale dans un plan horizontal.

La seconde partie de liaison 50 est formée par un logement complémentaire du rail 48, allongé dans la direction verticale, dans lequel le rail 48 est susceptible de coulisser verticalement.

En variante, la première partie de liaison pourrait être inversement formée par un logement allongé et la seconde partie de liaison par un rail complémentaire.

Le rail 48 s'étend dans la direction verticale entre une première extrémité 48A, destinée à être présentée en premier lors de l'insertion du rail 48 dans le logement 50, jusqu'à une seconde extrémité 48B. Le rail 48 présente de préférence une largeur, dans une direction transversale perpendiculaire à la direction verticale et parallèle à la paroi latérale 20, qui augmente depuis la première extrémité 48A jusqu'à la seconde extrémité 48B. Le rail 48 est donc délimité latéralement par deux parois latérales inclinées. Ainsi, le rail 48 présente, en vue de face, une forme générale trapézoïdale.

De même, le logement 50 s'étend dans la direction verticale depuis une embouchure inférieure 50A, à laquelle la première extrémité 48A du rail est destinée à s'insérer, jusqu'à une extrémité supérieure 50B. Le logement 50 présente une largeur, dans la direction transversale, qui diminue depuis l'embouchure inférieure 50A jusqu'à l'extrémité supérieure 50B. Le logement 50 est donc délimité latéralement par deux parois latérales inclinées. Le logement 50 présente ainsi, en vue de face, une forme générale de trapèze.

Ces formes en trapèze présentent plusieurs avantages. En particulier, la largeur du rail 48 à sa première extrémité 48A étant inférieure à la largeur du logement 50 à son embouchure inférieure 50A, l'insertion du rail 48 dans le logement 50 est facilitée. Le rail 48 peut notamment être inséré dans le logement 50 sans suivre une trajectoire purement verticale, mais en suivant une trajectoire courbe, correspondant au basculement du pied 24 évoqué précédemment.

Le rail 48 est montré partiellement inséré dans le logement 50 sur la figure 7.

La course du rail 48 dans le logement 50 est limitée par la coopération des parois inclinées du rail 48 avec les parois inclinées du logement 50, qui sont en contact en fin de course du rail 48 dans le logement 50. Ces parois inclinées en contact permettent également de supporter en partie le poids de la table 12.

Le rail 48 et le logement 50 sont assemblés à la fin de course du rail 48 dans ce logement 50, comme cela est représenté sur la figure 8.

Afin de maintenir l'organe de fixation 52 et le support fixe latéral 46 dans cette configuration assemblée, le dispositif de confort 10 comporte des moyens 54 rétractables de blocage de l'organe de fixation 52 sur le support fixe latéral 46.

Ces moyens rétractables de blocage 54 sont actifs lorsque l'organe de fixation 52 est rapporté sur le support fixe latéral 46 au terme de la course du rail 48 dans le logement 50.

Ces moyens de blocage 54 sont mobiles entre une position de blocage, dans laquelle le rail 48 et le logement 50 sont solidarisés entre eux, et une position de relâchement dans laquelle le rail 48 et le logement 50 sont libres de se déplacer l'un par rapport à l'autre.

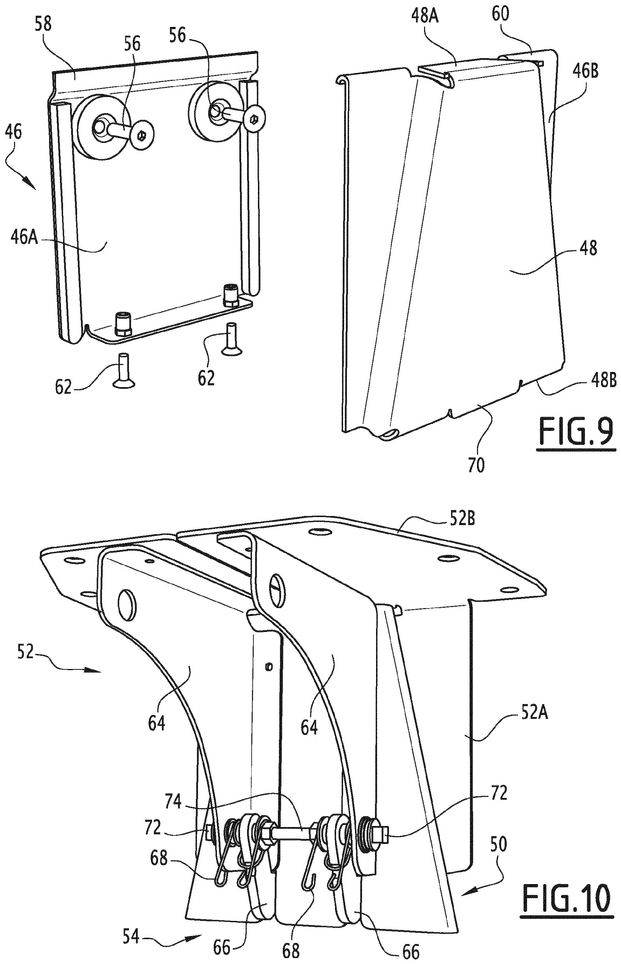

Des exemples de moyens de blocage 54 sont décrits plus en détail sur les figures 9 et 10, qui représentent respectivement un exemple de support fixe latéral 46 et un exemple d'organe de fixation 52.

Conformément à cet exemple de mode de réalisation, le support fixe latéral 46 comporte un panneau intérieur 46A, destiné à être fixé à la paroi latérale 20 de la salle grâce à des moyens de fixation classiques, par exemple au moyen de vis 56, et un second panneau extérieur 46B, destiné à être rapporté sur le panneau intérieur 46A, et portant le rail 48. A cet effet, le panneau intérieur 46A comporte une forme supérieure d'emboîtement 58, par exemple formée par une réglette supérieure solidaire du reste du panneau intérieur 46A, et le second panneau extérieur 46B comporte une partie recourbée d'emboîtement supérieur 60 destinée à reposer sur la réglette 58.

La fixation du panneau intérieur 46A avec le second panneau extérieur 46B est finalisée par des moyens de fixation inférieurs classiques 62, par exemple des vis.

En variante, le support fixe latéral 46 est réalisé en une seule partie, auquel cas les fixations 56 sont apparentes, comme cela est le cas pour l'exemple des figures 5 à 8.

L'organe de fixation 52 de l'exemple de la figure 10 comporte un premier panneau vertical 52A, portant le logement 50, et un second panneau horizontal 52B destiné à être fixé au plateau 22 de la table 12. A cet effet, le second panneau horizontal 52B est pourvu d'orifices de passage d'éléments de fixation tels que des vis.

Avantageusement, l'organe de fixation 52 comporte des goussets de renfort 64, reliant le premier panneau vertical 52A au second panneau horizontal 52B.

Les moyens de blocage 54 comportent au moins un élément mâle 66 porté par l'organe de fixation 52, mobile entre une position déployée et une position escamotée, et, au moins un premier organe élastique 68 de rappel de l'élément mâle 66 vers sa position déployée.

Les moyens de blocage 54 comportent par ailleurs au moins un élément femelle fixe 70, complémentaire de l'élément mâle 66, porté par le support fixe latéral 46, chaque élément mâle 66 se trouvant en regard de l'élément femelle 70 correspondant lorsque l'organe de fixation 52 est rapporté sur le support fixe latéral 46 au terme de la course du rail 48 par rapport au logement 50. Dans l'exemple représenté sur la figure 9, le support fixe latéral 46 porte un unique élément femelle 70 commun aux deux éléments mâles 66, mais il pourrait en variante comporter un élément femelle pour chaque élément mâle.

Tant que le rail 48 et le logement 50 coopèrent entre eux sans être au terme de leur course, l'élément mâle 66 coopère avec le support fixe latéral 46, notamment avec le rail 48, pour être poussé vers sa position escamotée. Ainsi, tant que le rail 48 et le logement 50 coopèrent entre eux, l'élément mâle 66 ne peut se déployer que lorsqu'il est en regard de l'élément femelle 70 correspondant.

Par ailleurs, les moyens de blocage 54 comportent des moyens 72 de déplacement de l'élément mâle 66 vers sa position escamotée, actionnables par un opérateur, par exemple au moyen d'un élément rapporté tel qu'une clé, par exemple une clé à section carrée.

Dans l'exemple décrit sur la figure 10, chaque élément mâle 66 est formé par un crochet porté par un axe tournant 74. Cet axe tournant 74 est porté par les goussets de renfort 64. L'axe tournant 74 comporte, à au moins l'une de ses extrémités, une forme d'actionnement formant les moyens de déplacement 72.

De préférence, l'axe tournant 74 présente une telle forme d'actionnement à chacune de ses extrémités, afin de pouvoir être indifféremment actionné d'un côté ou de l'autre, en fonction de la préférence de l'opérateur.

Dans l'exemple décrit sur la figure 9, l'élément femelle 70 est formé par une partie d'accrochage ménagée à l'extrémité inférieure 48B du rail 48. En variante, chaque partie femelle 70 est formée par un orifice ménagé dans le rail 48, en regard du crochet 66 correspondant.

Conformément à une autre variante non représentée, l'élément mâle est formé par un pêne déplaçable horizontalement. L'élément femelle correspondant est alors formé par un orifice complémentaire.

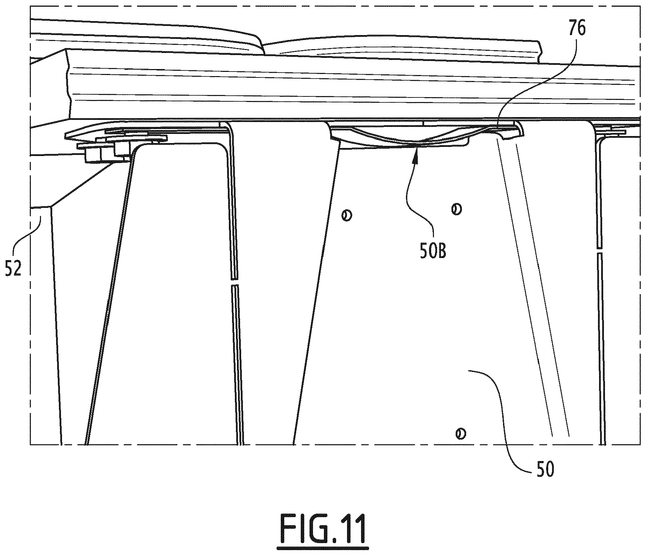

Avantageusement, comme cela est représenté sur la figure 11, l'organe de fixation 52 porte un second organe élastique 76, destiné à être agencé entre cet organe de fixation 52 et le support fixe latéral 46, pour appliquer un effort d'écartement entre cet organe de fixation 52 et le support fixe latéral 46 dans la direction verticale.

Ce second organe élastique 76 est par exemple formé par une lame élastique portée à l'extrémité supérieure 50B du logement 50, et destiné à prendre appui sur la première extrémité 48A du rail 48, qui forme un rebord comme cela est visible sur la figure 9.

Ainsi, lorsque l'organe de fixation 52 est assemblé au support fixe latéral 46, et que les moyens de blocage 54 sont désactivés par actionnement des moyens de déplacement 72, l'organe de fixation 52 remonte le long du rail 48 sous l'effet de l'effort d'écartement exercé par le second organe élastique 76, si bien que les éléments mâles 66 ne sont plus en regard de l'élément femelle 70 correspondant. Les moyens de blocage 54 sont ainsi désactivés. La table 12 reste toutefois en place, le rail 48 et le logement 50 restant maintenus entre eux de par leur forme en queue d'aronde.

La raideur du second organe élastique 76 est choisie pour résister au poids de la table, l'effort d'écartement devant être supérieur à ce poids, de sorte que seule une action de poussée de l'opérateur vers le bas permet d'engager chaque élément mâle 66 dans l'élément femelle 70 correspondant.

Le montage et le démontage du dispositif de confort 10 selon l'invention vont maintenant être décrits.

Afin de monter le dispositif de confort 10, le pied de table 24 est tout d'abord apporté, incliné, sur le support fixe au sol 26, en insérant la butée 40 sous le rebord 34, comme cela est représenté sur la figure 2.

La table 12 est ensuite basculée de manière à redresser verticalement le pied de table 24 comme cela est représenté sur la figure 3

Au cours de ce basculement, l'organe de fixation 52, porté par la table 12, vient coopérer avec le support fixe latéral 46, dont le rail 48 vient s'engager dans le logement 50. Du fait des formes en trapèze du rail 48 et du logement 50, ceux-ci viennent coopérer aisément entre eux malgré le fait que l'accostage se fasse au cours du basculement de la table 12, et non pas au cours d'un déplacement purement vertical.

Lorsque le rail 48 arrive en bout de course dans le logement 50, un effort de poussée doit être exercé sur la table pour vaincre l'effort d'écartement exercé par le second organe élastique 76, jusqu'à ce que chaque élément mâle 66 soit engagé dans l'élément femelle 70 correspondant.

L'organe de fixation 52 est alors bloqué sur le support fixe latéral 46, à la fois verticalement grâce aux moyens de blocage 54, perpendiculairement à la paroi latérale 20 du fait de la forme en queue d'aronde du rail 48 et du logement 50, et transversalement du fait des parois latérales du rail qui coopèrent avec les parois latérales du logement 50.

Afin de démonter la table, il est nécessaire d'actionner les moyens 72 de déplacement des éléments mâles 66, afin de les déplacer dans leur position rétractée et ainsi les désengager de l'élément femelle 70 correspondant.

L'organe de fixation 52 n'est alors plus bloqué verticalement, et celui-ci est entraîné vers le haut sous l'effet du second organe élastique 76. Les éléments mâles 66 ne sont alors plus en regard des éléments femelles correspondants 70, si bien que les moyens de blocage 54 sont désactivés.

Ainsi, ces moyens de blocage 54 sont désactivés sans nécessiter de maintenir les moyens de déplacement 72, si bien que l'opérateur a ainsi ses deux mains libres pour ensuite manoeuvrer la table 12.

Il est à noter que le déplacement vertical de l'organe de fixation 52 pour désactiver les moyens de blocage est possible grâce au jeu défini entre la butée 40 et le rebord 34, ainsi que, de préférence, grâce à la souplesse de la liaison entre le pied 24 et le plateau 22.

La table 12 est ensuite basculée, dans un mouvement opposé à celui ayant été effectué lors du montage de la table, pour libérer le pied 24 du support fixe au sol 26.

La table peut ainsi être transportée, pour être montée sur d'autres supports de fixation prévus dans la salle.

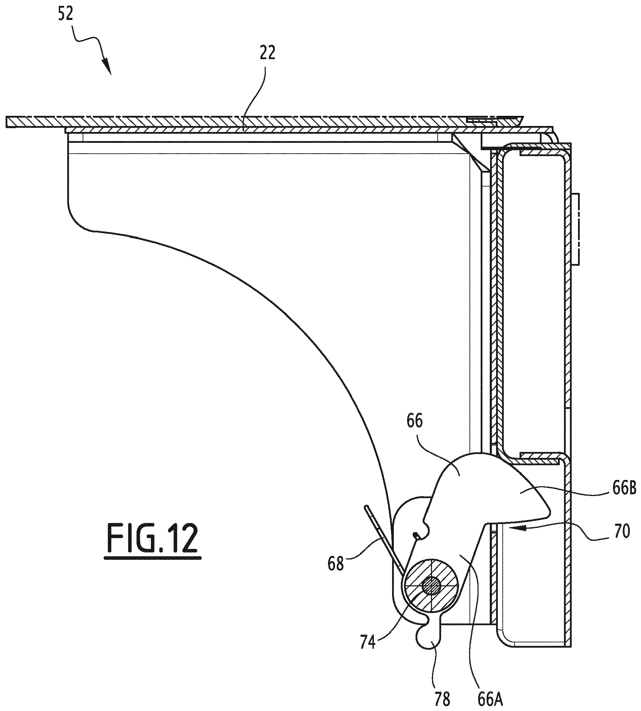

On a représenté sur la figure 12 l'organe de fixation 52 selon une autre variante de réalisation. Sur cette figure 12, les éléments analogues à ceux des figures précédentes sont désignés par des références identiques.

Conformément à cette variante de réalisation, les éléments mâles 66 ont une forme de crochet s'étendant au-dessus de leur axe tournant 74 dans la direction verticale (donc en direction de la tablette). Chaque élément mâle 66 comporte un corps 66A allongé relié à l'axe tournant 74, et une extension 66B s'étendant depuis en saillie depuis le corps 66A, l'extension 66B étant destinée à s'insérer dans l'élément femelle 70 correspondant.

Le corps 66A est incliné par rapport à la direction verticale, vers l'élément femelle 70.

Ainsi, du fait que l'élément mâle 66 s'étend au-dessus de l'axe tournant, et que le corps 66A est incliné vers l'élément femelle 70, en cas d'effort de traction vers le haut appliqué à la table 12, l'élément mâle 66, coopérant avec l'élément femelle 70, subit un couple de rotation autour de l'axe 74, vers l'élément femelle 70, ce qui a pour effet de renforcer le verrouillage. La sécurité du verrouillage est donc renforcée dans cette variante.

De manière optionnelle, l'élément mâle 66 est pourvu d'un levier 78 solidaire du corps 66A, s'étendant en-dessous de l'axe 74. Ce levier 78 forme des moyens de déplacement secondaires, activables par exemple si les moyens de déplacement 72 sont détériorés.

On notera que l'invention n'est pas limitée au mode de réalisation précédemment décrit, mais pourrait présenter diverses autres variantes, pour autant que celles-ci font partie du périmètre défini par les revendications.

Par exemple, d'autres structures de moyens de blocage 54 sont envisageables.

Conformément à une autre variante, la table est dépourvue de pied, et ne comporte qu'un plateau 22.

## Revendications

1. Dispositif de confort (10), notamment pour des passagers de véhicule ferroviaire, comportant une table (12) comprenant un plateau (22) et des moyens (14, 16) de fixation de la table à une partie structurelle (18, 20) d'une salle, dans lequel les moyens de fixation (14, 16) comportent :
- un support fixe latéral (46), destiné à être fixé à une paroi verticale (20) de la partie structurelle de la salle, comprenant une première partie de liaison par coulissement (48),
- un organe de fixation (52) solidarisé au plateau (22) de la table (12), comprenant une seconde partie de liaison par coulissement (50), complémentaire de la première (48),
- des moyens rétractables (54) de blocage de l'organe de fixation (52) sur le support fixe latéral (46), actifs lorsque l'organe de fixation (52) est rapporté sur le support fixe latéral (46) au terme d'une course prédéfinie de la première partie de liaison (48) par rapport à la seconde partie de liaison (50), ces moyens de blocage (54) étant mobiles entre une position de blocage dans laquelle les première (48) et seconde (50) parties de liaison sont solidarisées entre elles, et une position de relâchement dans laquelle les première (48) et seconde (50) parties de liaison sont libres de se déplacer l'une par rapport à l'autre,
**caractérisé en ce que** l'une des première (48) et seconde (50) parties de liaison par coulissement est formée par un rail, s'étendant dans une direction verticale, présentant une section trapézoïdale dans un plan horizontal, et l'autre des première et seconde parties de la liaison est formée par un logement (50) allongé complémentaire dudit rail (48), dans lequel le rail (48) est susceptible de coulisser dans la direction verticale.

2. Dispositif de confort (10) selon la revendication 1, dans lequel :
- le rail (48) s'étend dans la direction verticale entre une première extrémité (48A), destinée à être présentée en premier lors de l'insertion du rail (48) dans le logement (50), jusqu'à une seconde extrémité (48B), et présente une largeur, dans une direction transversale perpendiculaire à la direction verticale, qui augmente depuis la première extrémité (48A) jusqu'à la seconde extrémité (48B), et
- le logement (50) s'étend dans la direction verticale depuis une embouchure inférieure (50A), et présente une largeur, dans la direction transversale, qui diminue depuis cette embouchure inférieure (50A).

3. Dispositif de confort (10) selon l'une quelconque des revendications précédentes, dans lequel la table (12) comprend un pied central (24) solidaire du plateau (22), les moyens de fixation (14, 16) comportant un support fixe au sol (26), destiné à être fixé à une paroi de sol (18) de la partie structurelle de la salle, destiné à être raccordé au pied central (24) de la table (12), et comprenant des moyens (28) de maintien de ce pied central (24).

4. Dispositif de confort (10) selon la revendication 3, dans lequel le support fixe au sol (26) comporte une forme (30) en saillie verticale, présentant un bord périphérique (32) comprenant un rebord supérieur (34) s'étendant depuis une partie du bord périphérique (32), et le pied de table (24) comporte une zone inférieure creuse (36) présentant un bord intérieur (38) de forme complémentaire à celle du bord périphérique (32), et présentant une butée intérieure (40) s'étendant vers l'intérieur, ladite butée intérieure (40) étant destinée à être insérée sous le rebord supérieur (34), cette butée intérieure (40) étant ainsi destinée à coopérer avec le rebord supérieur (34) pour limiter un déplacement vertical vers le haut du pied de table (24).

5. Dispositif de confort (10) selon la revendication 4, dans lequel le rebord supérieur (34) s'étend horizontalement depuis le bord périphérique (32) en s'éloignant du support fixe latéral (46).

6. Dispositif de confort (10) selon l'une quelconque des revendications précédentes, dans lequel les moyens de blocage (54) comportent :
- au moins un élément mâle (66) porté par l'un parmi l'organe de fixation (52) et le support fixe latéral (46), mobile entre une position déployée et une position escamotée, et au moins un premier organe élastique (68) de rappel de l'élément mâle (66) vers sa position déployée,
- au moins un élément femelle fixe (70), complémentaire de l'élément mâle (66), porté par l'autre parmi l'organe de fixation (52) et le support fixe latéral (46), chaque élément mâle (66) se trouvant en regard de l'élément femelle (70) correspondant lorsque l'organe de fixation (52) est rapporté sur le support fixe latéral (46) au terme de la course prédéfinie de la première partie de liaison (48) par rapport à la seconde partie de liaison (50).

7. Dispositif de confort (10) selon la revendication 6, dans lequel l'élément mâle (66) est propre à coopérer avec ledit autre parmi l'organe de fixation (52) et le support fixe latéral (46), pour être poussé vers sa position escamotée tant que les première (48) et seconde (50) parties de liaison coopèrent entre elles sans être au terme de leur course.

8. Dispositif de confort (10) selon la revendication 6 ou 7, comportant des moyens (72) de déplacement de l'élément mâle (66) vers sa position escamotée, actionnables par un opérateur, par exemple au moyen d'un élément rapporté tel qu'une clé.

9. Dispositif de confort (10) selon l'une quelconque des revendications 6 à 8, dans lequel chaque élément mâle (66) est formé par un crochet porté par un axe tournant (74).

10. Dispositif de confort (10) selon l'une quelconque des revendications 6 à 9, comportant un second organe élastique (76) agencé entre l'organe de fixation (52) et le support fixe latéral (46), appliquant un effort d'écartement entre l'organe de fixation (52) et le support fixe latéral (46) dans la direction verticale.

11. Dispositif de confort (10) selon la revendication 9, ou la revendication 10 lorsqu'elle dépend de la revendication 9, dans lequel chaque élément mâle (66) s'étend au-dessus de son axe tournant (74) dans une direction verticale, et comporte un corps (66A) allongé relié à l'axe tournant (74), et une extension (66B) s'étendant depuis en saillie depuis le corps (66A), l'extension (66B) étant destinée à coopérer avec l'élément femelle (70) correspondant, et le corps (66A) étant incliné par rapport à la direction verticale, vers l'élément femelle (70).

## Patentansprüche

1. Komfort-Vorrichtung (10), insbesondere für Passagiere eines Schienenfahrzeugs, mit einem Tisch (12), der eine Platte (22) und Mittel (14, 16) zur Fixierung des Tischs an einem strukturellen Abschnitt (18, 20) eines Raums aufweist, wobei die Fixierungs-Mittel (14, 16) aufweisen:
- einen seitlichen fixen Halter (46), der dazu bestimmt ist, an einer vertikalen Wand (20) des strukturellen Abschnitts des Raums fixiert zu werden und der aufweist einen ersten Abschnitt zur Verbindung via Verschiebung (48),
- ein Fixierungsorgan (52), das fest mit der Platte (22) des Tischs (12) verbunden ist und das aufweist einen zweiten Abschnitt zur Verbindung via Verschiebung (50), der zu dem ersten (48) komplementär ist,
- einrückbare Mittel (54) zur Verriegelung des Fixierungsorgans (52) an dem seitlichen fixen Halter (46), die aktiv sind, wenn das Fixierungsorgan (52) an dem seitlichen fixen Halter (46) angebracht ist am Ende eines vorbestimmten Bewegungswegs des ersten Verbindungs-Abschnitts (48) relativ zu dem zweiten Verbindungs-Abschnitt (50), wobei diese Verriegelungs-Mittel (54) bewegbar sind zwischen einer Verriegelungsposition, in welcher der erste (48) und der zweite (50) Verbindungs-Abschnitt aneinander festgelegt sind, und einer Freigabeposition, in welcher der erste (48) und der zweite (50) Verbindungs-Abschnitt frei sind, sich relativ zueinander zu bewegen,
**dadurch gekennzeichnet, dass** der eine von dem ersten (48) und dem zweiten (50) Abschnitt zur Verbindung via Verschiebung von einer Schiene gebildet ist, die sich in eine vertikale Richtung erstreckt und die in einer horizontalen Ebene einen trapezförmigen Querschnitt hat, und der andere von dem ersten und dem zweiten Abschnitt zur Verbindung von einer langgestreckten Aufnahme (50) gebildet ist, die zu der Schiene (48) komplementär ist, wobei die Schiene (48) imstande ist, sich in der vertikalen Richtung zu verschieben.

2. Komfort-Vorrichtung (10) gemäß Anspruch 1, wobei:
- die Schiene (48) sich in der vertikalen Richtung erstreckt zwischen einem ersten Ende (48A), das dazu bestimmt ist, als erstes präsent zu sein beim Einsetzen der Schiene (48) in die Aufnahme (50), bis zu einem zweiten Ende (48B), und in eine Querrichtung senkrecht zu der vertikalen Richtung eine Breite hat, die ausgehend von dem ersten Ende (48A) bis zu dem zweiten Ende (48B) ansteigt, und
- die Aufnahme (50) sich in der vertikalen Richtung erstreckt ausgehend von einer unteren Einmündung (50A) und in der Querrichtung eine Breite hat, die sich ausgehend von dieser unteren Einmündung (50A) verkleinert.

3. Komfort-Vorrichtung (10) gemäß irgendeinem der vorhergehenden Ansprüche, wobei der Tisch (12) einen zentralen Fuß (24) aufweist, der fest mit der Platte (22) verbunden ist, wobei die Fixierungs-Mittel (14, 16) einen bodenfesten Halter (26) aufweisen, der dazu bestimmt ist, an einer Bodenwand (18) des strukturellen Abschnitts des Raums fixiert zu sein, und der dazu bestimmt ist, mit dem zentralen Fuß (24) des Tischs (12) verbunden zu sein, und der Mittel (28) zum Halten dieses zentralen Fußes (24) aufweist.

4. Komfort-Vorrichtung (10) gemäß Anspruch 3, wobei der bodenfeste Halter (26) eine vertikal vorstehende Form (30) hat, mit einem Umfangsrand (32), der einen oberen Kranz (34) aufweist, der sich ausgehend von einem Abschnitt des Umfangsrands (32) aus erstreckt, und der Tisch-Fuß (24) einen hohlen unteren Bereich (36) aufweist, mit einem inneren Rand (38) von einer Form, die komplementär ist zu jener des Umfangsrands (32), und mit einem inneren Anschlag (40), der sich zum Inneren hin erstreckt, wobei der innere Anschlag (40) dazu bestimmt ist, unter den oberen Kranz (34) eingesetzt zu sein, wobei dieser innere Anschlag (40) somit dazu bestimmt ist, mit dem oberen Kranz (34) zusammenzuwirken, um eine vertikale Verlagerung des Tisch-Fußes (24) nach oben hin zu beschränken.

5. Komfort-Vorrichtung (10) gemäß Anspruch 4, wobei der obere Kranz (34) sich horizontal erstreckt ausgehend von dem Umfangsrand (32) unter sich Wegerstrecken von dem seitlichen fixen Halter (46).

6. Komfort-Vorrichtung (10) gemäß irgendeinem der vorhergehenden Ansprüche, wobei die Verriegelungs-Mittel (54) aufweisen:
- wenigstens ein Stecker-Element (66), das von einem von dem Fixierungsorgan (52) und dem seitlichen fixen Halter (46) getragen wird und das bewegbar ist zwischen einer Ausrück-Position und einer Einrück-Position, mit wenigstens einem ersten elastischen Organ (68) zum Vorspannen des Stecker-Elements (66) zu dessen Ausrück-Position hin,
- wenigstens ein fixes Buchsen-Element (70), das zu dem Stecker-Element (66) komplementär ist und das von dem anderen von dem Fixierungsorgan (52) und dem seitlichen fixen Halter (46) getragen wird, wobei jedes Stecker-Element (66) sich gegenüber dem korrespondierenden Buchsen-Element (70) befindet, wenn das Fixierungsorgan (52) an dem seitlichen fixen Halter (46) angebracht ist am Ende des vordefinierten Bewegungswegs des ersten Verbindungs-Abschnitts (48) relativ zu dem zweiten Verbindungs-Abschnitt (50).

7. Komfort-Vorrichtung (10) gemäß Anspruch 6, wobei das Stecker-Element (66) imstande ist, mit dem anderen von dem Fixierungsorgan (52) und dem seitlichen fixen Halter (46) zusammenzuwirken, um zu seiner Einrück-Position hin gedrückt zu werden, solange der erste (48) und der zweite (50) Verbindungs-Abschnitt zusammenwirken ohne am Ende deren Bewegungswegs zu sein.

8. Komfort-Vorrichtung (10) gemäß Anspruch 6 oder 7, aufweisend Mittel (72) zur Verlagerung des Stecker-Elements (66) zu dessen Einrück-Position hin, die von einem Benutzer betätigbar sind, wie zum Beispiel mittels eines Anbauelements, wie eines Schlüssels.

9. Komfort-Vorrichtung (10) gemäß irgendeinem der Ansprüche 6 bis 8, wobei jedes Stecker-Element (66) von einem Haken gebildet ist, der von einem Drehschaft (74) getragen wird.

10. Komfort-Vorrichtung (10) gemäß irgendeinem der Ansprüche 6 bis 9, aufweisend ein zweites elastisches Organ (76), das zwischen das Fixierungsorgan (52) und den seitlichen fixen Halter (46) geschaltet ist und das eine Distanzierungskraft zwischen dem Fixierungsorgan (52) und dem seitlichen fixen Halter (46) in der vertikale Richtung aufbringt.

11. Komfort-Vorrichtung (10) gemäß Anspruch 9 oder Anspruch 10, wenn abhängig von Anspruch 9, wobei jedes Stecker-Element (66) sich in einer vertikalen Richtung über seinem Drehschaft (74) erstreckt und aufweist einen langgestreckten Körper (66A), der mit dem Drehschaft (74) verbunden ist, und einen Vorsprung (66B), der sich ausgehend von dem Körper (66A) vorstehend erstreckt, wobei der Vorsprung (66B) dazu bestimmt ist, mit dem korrespondierenden Buchen-Element (70) zusammenzuwirken, und wobei der Körper (66A) bezüglich der vertikalen Richtung zu dem Buchsen-Element (70) hin geneigt ist.

## Claims

1. A comfort device (10), notably for passengers of a railway vehicle, including a table (12) comprising a plate (22) and means (14, 16) for attaching the table to a structural portion (18, 20) of a compartment, wherein the attachment means (14, 16) include:
- a lateral fixed support (46), intended to be attached to a vertical wall (20) of the structural portion of the compartment, comprising a first connecting portion by sliding (48),
- an attachment member (52) secured to the plate (22) of the table (12), comprising a second connecting portion by sliding (50), mating the first (48),
- retractable means (54) for blocking the attachment member (52) on the lateral fixed support (46), active when the attachment member (52) is added onto the lateral fixed support (46) at the end of a predefined travel from the first connecting portion (48) relatively to the second connecting portion (50), these blocking means (54) being movable between a blocking position in which the first (48) and the second (50) connecting portions are secured to each other, and a release position in which the first (48) and second (50) connecting portions are free to move relatively to each other,
**Characterized in that** one of the first (48) and second (50) connecting portions by sliding is formed by a rail, extending in a vertical direction, having a trapezoidal section in a horizontal plane, and the other one of the first and second connecting portions is formed by an elongated housing (50) mating said rail (48), wherein the rail (48) may slide in the vertical direction.

2. The comfort device (10) according to claim 1, wherein:
- the rail (48) extends in the vertical direction between a first end (48A), intended to be presented first upon inserting the rail (48) into the housing (50), as far as a second end (48B), and has a width, in a transverse direction perpendicular to the vertical direction, which increases from the first end (48A) as far as the second end (48B), and
- the housing (50) extends in the vertical direction from a lower mouth (50A), and has a width, in the transverse direction, which decreases from this lower mouth (50A).

3. The comfort device (10) according to any of the preceding claims, wherein the table (12) comprises a central leg (24) secured to the plate (22), the attachment means (14, 16) including a fixed support on the floor (26), intended to be attached to a floor wall (18) of the structural portion of the compartment, intended to be connected to the central leg (24) of the table (12), and comprising means (28) for maintaining this central leg (24).

4. The comfort device (10) according to claim 3, wherein the fixed support on the floor (26) includes a vertically protruding shape (30), having a peripheral edge (32) comprising an upper edge (34) extending from a portion of the peripheral edge (32), and the table leg (24) includes a hollow lower area (36) having an inner edge (38) with a shape mating that of the peripheral edge (32), and having an inner abutment (40) extending inwards, said inner abutment (40) being intended to be inserted under the upper edge (34), this inner abutment (40) being thus intended to cooperate with the upper edge (34) for limiting vertical displacement upwards of the table leg (24).

5. The comfort device (10) according to claim 4, wherein the upper edge (34) extends horizontally from the peripheral edge (32) by moving away from the lateral fixed support (46).

6. The comfort device (10) according to any of the preceding claims, wherein the blocking means (54) include:
- at least one male element (66) borne by one from among the attachment member (52) and the lateral fixed support (46), movable between a deployed position and a retracted position, and at least one first elastic member (68) for returning the male element (66) towards its deployed position,
- at least one fixed female element (70), mating the male element (66), borne by the other one from among the attachment member (52) and the lateral fixed support (46), each male element (66) being found facing the corresponding female element (70) when the attachment member (52) is added onto the lateral fixed support (46) at the end of the predefined travel of the first connecting portion (48) with respect to the second connecting portion (50).

7. The comfort device (10) according to claim 6, wherein the male element (66) is able to cooperate with said other one from among the attachment member (52) and the lateral fixed support (46), in order to be pushed towards its retracted position as long as the first (48) and second (50) connecting portions cooperate with each other without being at the end of their travel.

8. The comfort device (10) according to claim 6 or 7, including means (72) for displacing the male element (66) towards its retracted position, which may be actuated by an operator, for example by means of an added-on element such as a key.

9. The comfort device (10) according to any of claims 6 to 8, wherein each male element (66) is formed by a hook borne by a rotating axis (74).

10. The comfort device (10) according to any of claims 6 to 9, including a second elastic member (76) laid out between the attachment member (52) and the lateral fixed support (46), applying a separation force between the attachment member (52) and the lateral fixed support (46) in the vertical direction.

11. The comfort device (10) according to claim 9, or claim 10 when it depends on claim 9, wherein each male element (66) extends above its rotating axis (74) in a vertical direction, and includes an elongated body (66A) connected to the rotating axis (74), and an extension (66B) extending and protruding therefrom and from the body (66A), the extension (66B) being intended to cooperate with the corresponding female element (70), and the body (66A) being tilted with respect to the vertical direction, towards the female element (70).
